# EUROPÄISCHE PATENTSCHRIFT

(11) **EP 3 026 318 B1**
(45) Veröffentlichungstag und Bekanntmachung des Hinweises auf die Patenterteilung: **14.02.2018**
(21) Anmeldenummer: 15202567.2
(22) Anmeldetag: 23.12.2015
(51) Int. Cl.: F16L 53/00, H05B 3/58

(54) **VERBINDER MIT MONTAGEHILFE SOWIE VERFAHREN ZUR HERSTELLUNG DIESES VERBINDERS**
CONNECTOR WITH MOUNTING AID AND METHOD FOR PRODUCING A CONNECTOR
CONNECTEUR COMPRENANT UNE AIDE AU MONTAGE ET PROCEDE DE FABRICATION DUDIT CONNECTEUR

(43) Veröffentlichungstag der Anmeldung: 01.06.2016
(73) Patentinhaber: TI Automotive (Fuldabrück) GmbH, 34277 Fuldabrück (DE)
(72) Erfinder: Barthel, Iris, 34270 Schauenburg (DE); Bube, Kay, 36277 Schenklengsfeld (DE); Häckel, Andre, 34513 Waldeck (DE); Weissing, Michael, 69120 Heidelberg (DE); Knobloch, Harald, 69121 Heidelberg (DE)
(74) Vertreter: von dem Borne, Andreas

(56) Entgegenhaltungen:
- DE-U1-202014 105 908
- US-A1- 2010 144 182
- US-A1- 2011 248 494

## Beschreibung

Die Erfindung betrifft einen Verbinder, insbesondere einen Schnellverbinder für fluide Medien eines Kraftfahrzeuges und insbesondere für eine Harnstofflösung. Der Verbinder weist ein Anschlussteil, eine Montagehilfe und eine Kapselung auf, wobei das Anschlussteil zwei Anschlussenden umfasst. Ein Innenkanal verbindet die Anschlussenden zwecks Durchleitung des fluiden Mediums miteinander. Das Anschlussteil weist einen Mittelabschnitt zwischen den Anschlussenden auf, wobei die Montagehilfe wenigstens in einem Teilbereich des Mittelabschnittes auf der Außenseite des Anschlussteiles angeordnet ist. An der Montagehilfe ist ein Heizmittel angeordnet, wobei die Kapselung wenigstens einen Teil des Heizmittels bedeckt. Die Erfindung betrifft ferner ein Verfahren zur Herstellung eines Verbinders.

Derartige Verbinder sind dem Schrifttum, beispielsweise EP 2 137 449 B1, zu entnehmen. Hierbei ist das Anschlussteil mittels Spritzguss als einstückiges Kunststoff-Formelement ausgebildet, wobei die Montagehilfe aufgrund des Spritzgusses integraler Teil des Anschlussteiles ist. Dabei variieren die Art und die Anordnung des elektrischen Heizmittels je nach Anwendungsfall, so dass ein Anschlussteil mit unterschiedlichen Montagehilfen kombiniert wird. Folglich besteht aus produktionstechnischer Hinsicht der Bedarf einer modulartigen Herstellungsweise, bei der ein Standard-Anschlussteil mit verschiedenartigen Montagehilfen kombiniert werden kann.

Hierzu wird in der gattungsgemässen EP 2 347 163 B1 vorgeschlagen, eine Montagehilfe auf ein Anschlussteil aufzurasten bzw. aufzuschieben. Die Montagehilfe ist dementsprechend starr ausgebildet und wird entweder in axialer oder aber in radialer Richtung auf einen Mittelabschnitt des Anschlussteiles aufgeschoben. Im Anschluss daran kann dann beispielsweise ein Heizdraht wendelförmig um die Montagehilfe herum gewickelt werden. Nachteilig hieran ist jedoch, dass die Montagehilfe aufwendig gestalteter Rastmittel bedarf, um die Montagehilfe zuverlässig auf dem Anschlussteil zu befestigen. Ebenso bedarf es speziell angepasster gegenteiliger Rastmittel auf dem Anschlussteil. Die Rastmittel aber stellen Fehlerquellen dar, weil sie verhältnismäßig filigran ausgebildet sind und aus diesem Grunde für einen gewissen Teil des Ausschusses verantwortlich sind. Außerdem können Fehler bei einer nur unzureichenden Aufrastbewegung auftreten, so dass keine oder eine nur unzureichende Rastverbindung entsteht. Ferner kann der Heizdraht bzw. das Heizmittel in der Montagehilfe selber leicht verrutschen, was ebenfalls unerwünscht ist, da hierdurch beispielsweise eine ungleichmäßige Flächenverteilung des Heizdrahtes entstehen kann.

Der Erfindung liegt demzufolge das technische Problem zugrunde, einen gattungsgemäßen Verbinder zu schaffen, bei dem die vorstehend beschriebenen Nachteile vermieden werden können. Insbesondere liegt der Erfindung das technische Problem zugrunde, ein Baukastensystem zu schaffen, bei welchem das Anschlussteil mit mehreren verschiedenartigen Montagehilfen kombiniert werden kann. Vorzugsweise liegt der Erfindung das technische Problem zugrunde, eine möglichst gute Verbindung zwischen Anschlussteil, Montagehilfe und Heizmittel zu gewährleisten, um den Ausschuss bzw. den Herstellungsaufwand zu verringern.

Zur Lösung des technischen Problems lehrt die Erfindung einen Verbinder, insbesondere Schnellverbinder, für ein fluides Medium eines Kraftfahrzeuges, insbesondere für eine Harnstofflösung, wobei der Verbinder ein Anschlussteil, eine Montagehilfe und eine Kapselung aufweist, wobei das Anschlussteil zwei Anschlussenden umfasst, wobei ein Innenkanal die Anschlussenden zwecks Durchleitung des fluiden Mediums miteinander verbindet, wobei das Anschlussteil einen Mittelabschnitt zwischen den Anschlussenden aufweist, wobei die Montage wenigstens in einem Teilbereich des Mittelabschnittes auf der Außenseite des Anschlussteiles angeordnet ist, wobei an der Montagehilfe ein Heizmittel angeordnet ist, wobei die Kapselung wenigstens einen Teil des Heizmittels bedeckt, wobei die Montagehilfe mittels Kraftschluss auf dem Anschlussteil angeordnet ist, wobei die Montagehilfe gummiartig elastisch ausgebildet ist.

Der Begriff "gummiartig" meint insbesondere, dass die Montagehilfe in axialer Richtung und/oder radialer Richtung per Hand gedehnt werden kann. Es ist zweckmäßig, dass die Montagehilfe aus einem weicheren Material als das Anschlussteil besteht. Gemäß einer besonders bevorzugten Ausführungsform umfasst die Montagehilfe ein Elastomer und ganz besonders bevorzugt ein thermoplastisches Elastomer. Bevorzugt umfasst die Montagehilfe ein thermoplastisches Elastomer auf Olefinbasis und/oder ein vernetztes thermoplastisches Elastomer auf Olefinbasis und/oder ein thermoplastisches Elastomer auf Urethanbasis und/oder ein thermoplastisches Polyesterelastomer und/oder ein thermoplastisches Copolyester und/oder Styrol-Blockcopolymere und/oder thermoplastische Copolyamide.

Als fluide Medien kommen beispielsweise Scheibenwischwasser oder Harnstofflösungen in Betracht. Unter dem Begriff "Harnstofflösung" fallen insbesondere die Produkte *AdBlue* bzw. *Diesel Exhaust Fluid* (DEF). Als "Verbinder" werden vorzugsweise jene Teile verstanden, welche ein Rohr mit einem anderen Rohr oder ein Rohr mit einer Komponente verbinden. "Komponenten" sind beispielsweise Tanks, Düsen oder Pumpen. Der Ausdruck "Schnellverbinder" meint bevorzugt, dass wenigstens ein Anschlussende als Teil einer lösbaren Rastverbindung ausgebildet ist. Das Heizmittel ist vorzugsweise ein elektrisches Heizmittel. Als elektrische Heizmittel kommen beispielsweise Heizdrähte, Heizfolien, PTC- oder NTC-Widerstände in Betracht. Vorzugsweise umfasst das elektrische Heizmittel wenigstens einen Heizdraht.

Der Ausdruck "Kraftschluss" meint vorzugsweise, dass die Montagehilfe derart auf dem Anschlussteil sitzt, dass sie auf dem Anschlussteil unbeweglich angeordnet ist. Vorzugsweise ist die Montagehilfe mittels Kraftschluss auf dem Anschlussteil befestigt. Es ist bevorzugt, dass die Montagehilfe überwiegend mittels Kraftschluss auf dem Anschlussteil befestigt ist. Unter den Begriff "Kraftschluss" fallen beispielsweise auch Schrumpfschläuche. Insbesondere ist vorteilhaft, dass die Montagehilfe und das Anschlussteil derart ausgebildet sind, dass die Montagehilfe ohne den Kraftschluss nicht an dem Anschlussteil befestigt wäre. Der Ausdruck "befestigt" meint insbesondere, dass die Montagehilfe spielfrei in axialer und vorzugsweise auch in radialer Richtung angeordnet ist. Der Ausdruck "befestigt" meint im Speziellen, dass die Montagehilfe per Hand von dem Anschlussteil abgezogen werden kann. Ganz besonders bevorzugt ist die Montagehilfe nicht mittels eines Stoffschlusses an dem Anschlussteil angeordnet. Vorteilhafterweise ist die Montagehilfe nicht mittels einer Rastverbindung an dem Anschlussteil angeordnet. Der Ausdruck "Rastverbindung" ist vorzugsweise so zu verstehen, dass starre, aber federnd ausgebildete Rastelemente aufgrund federnder Rückstellwirkung einen Formschluss eingehen. Gemäß einer weiteren, ganz besonders bevorzugten Ausführungsform steht die Montagehilfe auf dem Anschlussteil unter einer, vorzugsweise radial ausgerichteten, Zugspannung. Es ist möglich, dass die Montagehilfe zerstörungsfrei von dem Anschlussteil abziehbar ist. Vorteilhafterweise besteht zumindest entlang eines axialen Längenabschnitts der Montagehilfe eine vollumfängliche radiale Zugspannung. Der Ausdruck "vollumfängliche radiale Zugspannung" meint insbesondere, dass die Zugspannungen entlang eines vollen Umlaufs der Montagehilfe um das Anschlussteil herum wirken. Besonders vorzugsweise steht die Montagehilfe wenigstens entlang der Hälfte der axialen Länge der Montagehilfe und bevorzugt entlang der vollen axialen Länge der Montagehilfe unter einer vollumfänglichen radialen Zugspannung. Es ist ganz besonders bevorzugt, dass die Zugspannung durch eine Schrumpfung der Montagehilfe entsteht. Vorzugsweise wird die Schrumpfung aufgrund einer Abkühlung des Montagehilfematerials bei einer Umspritzung des Montagehilfematerials um das Anschlussteil herum erzeugt. Ganz besonders vorteilhafterweise ist die abgezogene Montagehilfe nicht auf das Anschlussteil aufschiebbar. Gemäß einer ersten Ausführungsform ist die Montagehilfe nicht auf das Anschlussteil aufschiebbar, weil aufgrund einer Schrumpfung der Innendurchmesser der Montagehilfe geringer ist als der Außendurchmesser des Anschlussteiles. Gemäß einer anderen Ausführungsform ist die Montagehilfe nicht auf das Anschlussteil aufschiebbar, da der Kraftschluss so ausgeprägt ist, dass die Montagehilfe bei einem Abziehen zerstört würde. Vorzugsweise ist die Montagehilfe insbesondere nicht in axialer Richtung aufschiebbar. Gemäß einer weiteren Ausführungsform ist die Montagehilfe eine auf das Anschlussteil aufziehbare gummiartige Hülse, welche Hülse vorzugsweise einen Innendurchmesser aufweist, der geringer ist als der zugeordnete Außendurchmesser des Anschlussteiles.

Es liegt im Rahmen der Erfindung, dass die Schmelztemperatur T_{MM} des Montagehilfematerials geringer als die Schmelztemperatur T_{MA} des Anschlussteilmaterials ist. Vorzugsweise ist die Schmelztemperatur T_{MK} des Kapselungsmaterials kleiner/gleich der Schmelztemperatur T_{MM} des Montagehilfematerials. Gemäß einer besonders bevorzugten Ausführungsform ist die Schmelztemperatur T_{MK} des Kapselungsmaterials gleich der Schmelztemperatur T_{MM} des Montagehilfematerials. Gemäß einer anderen Ausführungsform ist die Schmelztemperatur T_{MK} des Kapselungsmaterials größer als die Schmelztemperatur T_{MM} des Montagehilfematerials.

Es ist vorteilhaft, dass der Querschnitt einer dem Anschlussteil zugewandten Innenfläche der Montagehilfe über wenigstens ein zusammenhängendes Drittel, weiter vorzugsweise über wenigstens eine zusammenhängende Hälfte und ganz besonders bevorzugt über die ganze Länge der axialen Länge der Montagehilfe konstant ist. Vorzugsweise ist wenigstens ein Teilabschnitt, weiter vorzugsweise wenigstens ein Drittel noch weiter vorzugsweise wenigstens die Hälfte und bevorzugt die volle Länge des Mittelabschnitts zylindrisch ausgebildet. Es ist bevorzugt, dass der von der Montagehilfe bedeckte Bereich des Anschlussteiles durchgängig zylindrisch ausgebildet ist und insbesondere einen konstanten Außendurchmesser aufweist.

Es ist zweckmäßig, dass die Montagehilfe in einem axialen Längsschnitt wenigstens eine Erhebung mit zwei Flanken aufweist, welche Erhebung massiv ausgebildet ist. Die Erhebung erstreckt sich praktischerweise wendelförmig um das Anschlussteil herum. Die Montagehilfe umfasst vorteilhafterweise wenigstens eine wendelförmige Nut. Besonders bevorzugt umfasst die Montagehilfe zwei wendelförmige Nuten in Form einer Doppelhelix. Die wendelförmige Nut umfasst bevorzugt einen bis zwölf volle Umläufe und weiter bevorzugt zwei bis acht volle Umläufe. Die Montagehilfe weist praktischerweise zwei derart gebildete Vorsprünge auf, dass der Heizdraht im Bereich dieser Vorsprünge s-förmig verläuft. Vorzugsweise ist wenigstens ein Vorsprung ein Teil einer wendelförmigen Erhebung. Es ist bevorzugt, dass wenigstens ein Vorsprung an einem Ende der Montagehilfe angeordnet ist.

Es ist liegt im Rahmen der Erfindung, dass die Montagehilfe wenigstens in einem Teilbereich einen Stoffschluss mit der Kapselung eingegangen ist. Es ist möglich, dass die Montagehilfe bei einer Umspritzung mit dem Kapselungsmaterial vollständig verflüssigt wurde und einen entsprechenden Stoffschluss mit dem Kapselungsmaterial eingegangen ist. Vorzugsweise ist die Montagehilfe einstückig mit der Kapselung verbunden. Es ist bevorzugt, dass die Montagehilfe stoffschlüssig mit der Kapselung verbunden ist. Vorzugsweise schrumpft die Kapselung beim Abkühlen. Es ist vorteilhaft, dass die Kapselung einen Kraftschluss auf die Montagehilfe bzw. auf das Anschlussteil ausübt. Zweckmäßigerweise bedeckt die Kapselung ein elektrisches Heizmittel und bevorzugt auch elektrische Anschlussleiter.

Es ist zweckmäßig, dass sich die Kapselung von dem Mittelabschnitt über ein Anschlussende hin zu einem Rohr erstreckt. Vorzugsweise weist das Rohr eine innere Fluidleitung sowie eine äußere Umhüllung auf. Die äußere Umhüllung ist bevorzugt ein Wellrohr. Ganz besonders bevorzugt umschließt die Kapselung ein radial nach außen vorstehendes Element des Rohres und vorzugsweise ein radial nach außen vorstehendes Element der äußeren Umhüllung. Das radial nach außen vorstehende Element ist vorteilhafterweise eine Rippe. Die Kapselung umschließt das radial nach außen vorstehende Element zweckmäßigerweise formschlüssig bzw. form- und kraftschlüssig. Es ist möglich, dass wenigstens ein Teil der Montagehilfe zwischen dem Heizmittel und dem Anschlussteil angeordnet ist. Zweckmäßigerweise ist das Heizmittel auf der Außenseite der Montagehilfe angeordnet. Gemäß einer ganz besonders bevorzugten Ausführungsform umschließen die Montagehilfe und die Kapselung das Heizmittel kammerfrei. Der Begriff "kammerfrei" meint künstlich geschaffene Hohlräume, worunter insbesondere nicht etwaige Lufteinschlüsse in Form von Blasen zu verstehen sind. Gemäß einer Ausführungsform weist die Kapselung wenigstens zwei Teilschalen auf. Die zwei Teilschalen sind vorzugsweise zwei Halbschalen. Die zwei Teilschalen können über entsprechende Rastmittel verbunden werden. Zweckmäßigerweise sind die zwei Teilschalen über ein Filmscharnier miteinander verbunden.

Gemäß einer besonders bevorzugten Ausführungsform umfasst die Kapselung ein thermoplastisches Material und insbesondere ein thermoplastisches Elastomer. Es ist hierbei besonders bevorzugt, dass das Material der Kapselung dem Material der Montagehilfe entspricht. Bevorzugt umfasst die Kapselung ein thermoplastisches Elastomer auf Olefinbasis und/oder ein vernetztes thermoplastisches Elastomer auf Olefinbasis und/oder ein thermoplastisches Elastomer auf Urethanbasis und/oder ein thermoplastisches Polyesterelastomer und/oder ein thermoplastisches Copolyester und/oder Styrol-Blockcopolymere und/oder thermoplastische Copolyamide. Es ist vorteilhaft, dass das Anschlussteil aus einem thermoplastischen Material besteht. Vorzugsweise umfasst das Anschlussteil ein Polyamid und/oder ein Polyphthalamid.

Zur Lösung des technischen Problems lehrt die Erfindung ein Verfahren zur Herstellung eines Verbinders, insbesondere eines erfindungsgemäßen Verbinders, wobei der Verbinder ein Anschlussteil, eine Montagehilfe und eine Kapselung aufweist, wobei das Anschlussteil zwei Anschlussenden umfasst, wobei ein Innenkanal die Anschlussenden zwecks Durchleitung eines fluiden Mediums miteinander verbindet, wobei das Anschlussteil einen Mittelabschnitt zwischen den Anschlussenden aufweist, wobei die Montagehilfe wenigstens in einem Teilbereich des Mittelabschnittes auf der Außenseite des Anschlussteiles angeordnet wird, wobei an der Montagehilfe ein Heizmittel angeordnet wird, wobei die Kapselung wenigstens einen Teil des Heizmittels bedeckt, wobei die Montagehilfe gummiartig elastisch ausgebildet ist und um das Anschlussteil gespritzt wird, wobei die Montagehilfe nach der Umspritzung schrumpft, so dass ein Kraftschluss zwischen der Montagehilfe und dem Anschlussteil entsteht.

Gemäß einer besonders bevorzugten Ausführungsform ist die Temperatur des Montagehilfematerials bei dem Umspritzen der Montagehilfe geringer als die Schmelztemperatur T_{MA} des Anschlussteilmaterials. Vorzugsweise ist die Temperatur des erhitzen Montagehilfematerials derart, dass kein Stoffschluss mit dem Anschlussteil stattfindet. Es liegt im Rahmen der Erfindung, dass die Montagehilfe in radialer Richtung beim Abkühlen um 0,1 bis 20 %, vorzugsweise um 0,2 bis 10 % und besonders vorzugsweise um 0,5 bis 5 % schrumpft. Da die Montagehilfe auf dem Anschlussteil sitzt, ist eine solche Schrumpfung mit bloßem Auge normalerweise schwer zu erkennen. Allerdings weist die Montagehilfe vorzugsweise eine entsprechend ausgeprägte Zugspannung auf.

Gemäß einer ganz besonders bevorzugten Ausführungsform wird die Kapselung wenigstens um das Heizmittel herumgespritzt. Bevorzugt bedeckt die Kapselung einen Großteil des Mittelabschnittes. Vorzugsweise ist die Temperatur des erhitzten Kapselungsmaterials bei dem Umspritzen der Kapselung geringer als die Schmelztemperatur T_{MA} des Anschlussteilmaterials. Es ist vorteilhaft, dass die Temperatur des erhitzten Kapselungsmaterials beim Umspritzen der Kapselung größer/gleich der Schmelztemperatur T_{MM} des Montagehilfematerials ist. Es ist besonders bevorzugt, dass das Kapselungsmaterial beim Umspritzen einen Stoffschluss mit dem Montagehilfematerial eingeht. Es ist besonders vorteilhaft, wenn das Kapselungsmaterial beim Abkühlen nach der Umspritzung schrumpft, so dass ein Kraftschluss auf die Montagehilfe bzw. auf das Anschlussteil entsteht. Gemäß einer besonders bevorzugten Ausführungsform umschließt die Kapselung das Heizmittel formschlüssig. Es ist bevorzugt, dass die Kapselung das Heizmittel kraftschlüssig umschließt. Es liegt im Rahmen der Erfindung, dass das Anschlussteil ein Spritzgussteil ist und die Montagehilfe mittels Mehrkomponenten-Spritzgießen an dem Anschlussteil angeordnet wird.

Nachfolgend wird die Erfindung anhand lediglich ein Ausführungsbeispiel darstellenden Zeichnung näher erläutert. Es zeigen in schematischer Darstellung:
- **Fig. 1**: eine perspektivische Darstellung eines erfindungsgemäßen Verbinders ohne Heizmittel und Kapselung und
- **Fig. 2**: einen Längsschnitt durch den Verbinder aus Fig. 1 nach Umwickeln mit einem Heizdraht und nach Umspritzen der Kapselung.

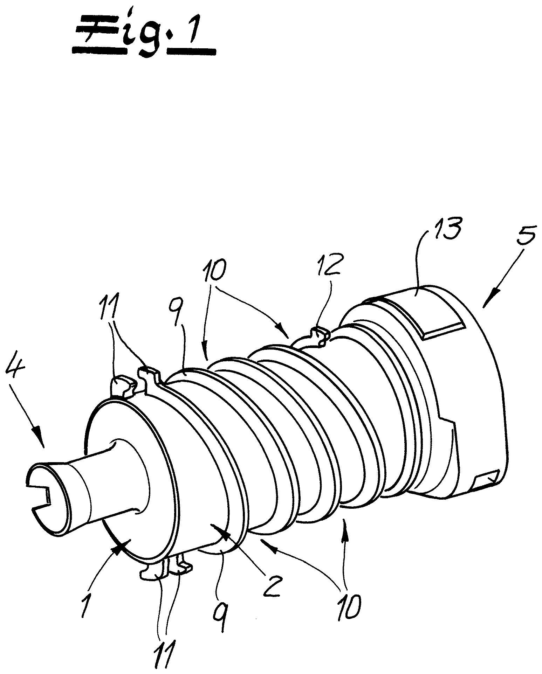

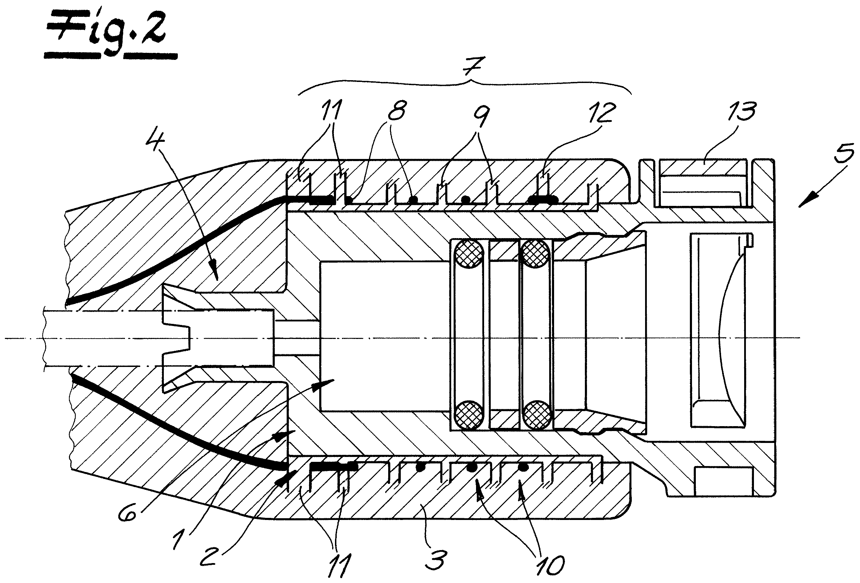

In Fig. 1 ist ein erfindungsgemäßer Schnellverbinder umfassend ein Anschlussteil 1 sowie eine Montagehilfe 2 dargestellt. Das Anschlussteil 1 umfasst zwei Anschlussenden 4, 5, wobei das linke Anschlussende 4 dazu ausgebildet ist, dass dort ein nicht dargestelltes Rohr eingesteckt wird. Das Rohr wird beispielsweise mittels Laserdurchstrahlschweißen an dem Anschlussende 4 befestigt. Zwischen den Anschlussenden 4, 5 befindet sich ein zylindrisch ausgebildeter Mittelabschnitt 7 des Anschlussteiles 1 (s. Fig. 2). Das Anschlussende 5 ist ein weibliches Steckerteil und dementsprechend dazu ausgebildet, ein ebenfalls nicht dargestelltes männliches Steckerteil aufzunehmen. Das männliche Steckerteil weist eine ringförmige Erhebung an der Außenseite auf, welche ein Einrasten im Zusammenspiel mit einem Rastelement 13 des Anschlussendes 5 erlaubt. Das männliche Steckerteil ist beispielsweise ein Element einer Fluidkomponente (Tank, Pumpe, Düse oder dergleichen) oder ein Teil eines anderen Rohres.

Das Anschlussteil 1 wird mittels Spritzgießen hergestellt und besteht bevorzugt aus Polyamid. Die Montagehilfe 2 wird mittels Mehrkomponenten-Spritzgießen um das Anschlussteil 1 herum gespritzt und besteht aus einem thermoplastischen Elastomer. Dabei ist die Temperatur des flüssigen Montagehilfematerials beim Umspritzen geringer als die Schmelztemperatur T_{MA} des Anschlussteilmaterials. Auf diese Weise wird ein Stoffschluss zwischen dem Montagehilfematerial und dem Anschlussteilmaterial verhindert. Nach dem Umspritzen kühlt das Montagehilfematerial ab, so dass die Montagehilfe 2 eine Schrumpfung um 2 bis 3 % erfährt. Aufgrund des fest ausgebildeten Anschlussteils 1 äußert sich diese Schrumpfung aber nicht in einer Verringerung der Größe der Montagehilfe 2, sondern darin, dass die Montagehilfe 2 entlang der gesamten Länge der Montagehilfe 2 einer voll umfänglichen radial ausgerichteten Zugspannung ausgesetzt wird. Diese Zugspannung führt in Verbindung mit dem hohen Reibwert des thermoplastischen Elastomers der Montagehilfe 2 zu einem Kraftschluss der Montagehilfe 2 auf dem Anschlussteil 1.

Aufgrund des Kraftschlusses ist die Montagehilfe 2 auf dem Anschlussteil 1 befestigt, so dass dann der vorgefertigte Verbinder mit dem Rohr verbunden werden kann. Das Rohr weist zwei doppelhelixartig um die Außenhaut des Rohres gewundene Heizdrähte auf, deren Enden ein Stück weit über das Rohrende vorstehen. Der überstehende Heizdraht wird dann um Vorsprünge 11 der Montagehilfe 2 gewunden, so dass der Heizdraht 8 in diesen Bereich s-förmig verläuft. In der in Fig. 1 gezeigten Ausführungsform weist die Montagehilfe 2 zwei Bereiche mit jeweils zwei Vorsprüngen 11 auf, da um das Rohr zwei Heizdrähte geführt sind.

Nachdem die Heizdrähte s-förmig um die Vorsprünge 11 gelegt wurden, werden sie entlang von zwei Wendelnuten 10 geführt, welche durch zwei wendelförmige Erhebungen 9 der Montagehilfe 2 gebildet werden. Das Ergebnis der wendelförmigen Umwicklung mit dem Heizdraht 8 bzw. den Heizdrähten 8 ist in Fig. 2 zu erkennen. Mit Hilfe eines vorspringenden Endes 12 einer wendelförmigen Erhebung 9 wird der Heizdraht 8 umgelenkt und entlang der zweiten Wendelnut 10 Richtung Rohr bzw. Anschlussleiter zurückgeführt. Der Heizdraht 8 bzw. die Heizdrähte 8 erwärmen insbesondere einen Innenkanal 6, um auf diese Weise ein Einfrieren einer Harnstofflösung zu verhindern. Nicht dargestellt jedoch sind in Fig. 2 die elektrischen Anschlussleiter für die Heizdrähte 8.

Nach Anordnung des Heizdrahtes 8 oder der Heizdrähte 8 an dem Verbinder mitsamt elektrischer Verbindung wird die Kapselung 3 um das Aggregat aus dem Anschlussteil 1, der Montagehilfe 2, den Heizdrähten 8 und einer in Fig. 2 strichpunktliniert dargestellten inneren Fluidleitung des Rohres herum gespritzt. Die Kapselung 3 besteht aus dem gleichen Material wie die Montagehilfe 2, also aus einem thermoplastischen Elastomer. Die Temperatur des erhitzten und flüssigen thermoplastischen Elastomers ist geringer als die Schmelztemperatur T_{MA} des Anschlussteiles 1, so dass ein Aufweichen der Oberfläche des Anschlussteiles 1 nicht zu erwarten ist.

Aufgrund der Umspritzung umschließt die Kapselung 3 die innenliegenden Komponenten formschlüssig und bietet einen guten Schutz insbesondere für den Heizdraht 8 oder die Heizdrähte 8. Die Temperatur des flüssigen Kapselungsmaterials beim Umspritzen wird so gewählt, dass zugleich auch die Montagehilfe 2 bis zur teilweisen oder völligen Verflüssigung erhitzt wird. In der Folge gehen die Montagehilfe 2 und die Kapselung 3 einen Stoffschluss ein. Der Stoffschluss ist in Fig. 2 schematisch dargestellt, indem die Spitzen der Vorsprünge 11 bzw. wendelförmigen Erhebungen 9 ohne Abschluss gezeichnet sind. Der Stoffschluss kann sich insbesondere aber auch auf die Böden der Wendelnuten 10 erstrecken. Hierdurch wird gewährleistet, dass der Heizdraht 8 oder die Heizdrähte 8 sehr dicht von thermoplastischem Elastomer umschlossen und so auch entsprechend gut vor Feuchtigkeitseinflüssen geschützt sind. Überdies erfährt die Kapselung 3 ebenfalls eine Schrumpfung, wodurch ein Kraftschluss auf die innenliegenden Komponenten ausgeübt wird. Hierdurch wird die Fluiddichtigkeit noch erhöht. Außerdem ist der Kraftschluss förderlich für die Stabilität des gesamten Verbinders und insbesondere für die Fixierung des Heizdrahtes 8 oder Heizdrähte 8.

## Patentansprüche

1. Verbinder, insbesondere Schnellverbinder, für ein fluides Medium eines Kraftfahrzeugs, insbesondere für eine Harnstofflösung, wobei der Verbinder ein Anschlussteil (1), eine Montagehilfe (2) und eine Kapselung (3) aufweist, wobei das Anschlussteil (1) zwei Anschlussenden (4, 5) umfasst, wobei ein Innenkanal (6) die Anschlussenden (4, 5) zwecks Durchleitung des fluiden Mediums miteinander verbindet, wobei das Anschlussteil (1) einen Mittelabschnitt (7) zwischen den Anschlussenden (4, 5) aufweist, wobei die Montagehilfe (2) wenigstens in einem Teilbereich des Mittelabschnittes (7) auf der Außenseite des Anschlussteils (1) angeordnet ist, wobei an der Montagehilfe (2) ein Heizmittel (8) geführt wird, wobei die Kapselung (3) wenigstens einen Teil des Heizmittels (8) bedeckt, wobei die Montagehilfe (2) mittels Kraftschluss auf dem Anschlussteil (1) angeordnet ist,
**dadurch gekennzeichnet, dass**
die Montagehilfe (2) gummiartig elastisch ausgebildet ist.

2. Verbinder nach einem der Anspruch 1, wobei die Montagehilfe (2) wenigstens in einem Teilbereich einen Stoffschluss mit der Kapselung (3) eingegangen ist.

3. Verbinder nach einem der Ansprüche 1 oder 2, wobei die Montagehilfe (2) ein thermoplastisches Elastomer umfasst.

4. Verbinder nach einem der Ansprüche 1 bis 3, wobei die Kapselung (3) aus einem thermoplastischen Elastomer besteht.

5. Verbinder nach einem der Ansprüche 1 bis 4, wobei das Anschlussteil (1) aus einem thermoplastischen Material besteht.

6. Verbinder nach einem der Ansprüche 1 bis 5, wobei die Schmelztemperatur T_{MM} des Montagehilfematerials geringer als die Schmelztemperatur T_{MA} des Anschlussteilmaterials ist.

7. Verbinder nach einem der Anspruch 1 bis 6, wobei die Montagehilfe (2) auf dem Anschlussteil (1) unter einer, vorzugsweise radial ausgerichteten, Zugspannung steht.

8. Verbinder nach einem der Ansprüche 1 bis 7, wobei der Querschnitt einer dem Anschlussteil (1) zugewandten Innenfläche der Montagehilfe (2) über wenigstens ein zusammenhängendes Viertel der axialen Länge der Montagehilfe (2) konstant ist.

9. Verbinder nach einem der Ansprüche 1 bis 8, wobei die Montagehilfe (2) im Längsschnitt wenigstens eine Erhebung (9) mit zwei gegenüberliegenden Flanken aufweist, welche Erhebung (9) massiv ausgebildet ist.

10. Verfahren zur Herstellung eines Verbinders, insbesondere eines Verbinders gemäß einem der Ansprüche 1 bis 9, wobei der Verbinder ein Anschlussteil (1), eine Montage (2) und eine Kapselung (3) umfasst, wobei das Anschlussteil (1) zwei Anschlussenden (4, 5) aufweist, wobei ein Innenkanal (6) die Anschlussenden (4, 5) zwecks Durchleitung eines fluiden Mediums miteinander verbindet, wobei das Anschlussteil (1) einen Mittelabschnitt (7) zwischen den Anschlussenden (4, 5) aufweist, wobei die Montagehilfe (2) wenigstens in einem Teilbereich des Mittelabschnittes (7) auf der Außenseite des Anschlussteils (1) angeordnet wird, wobei an der Montagehilfe (2) ein Heizmittel (8) angeordnet wird, wobei die Kapselung (3) wenigstens einen Teil des Heizmittels (8) bedeckt,
**dadurch gekennzeichnet,dass**
die Montagehilfe (2) gummiartig elastisch ausgebildet ist und um das Anschlussteil (1) gespritzt wird, wobei die Montagehilfe (2) nach der Umspritzung schrumpft, so dass ein Kraftschluss zwischen der Montagehilfe (2) und dem Anschlussteil (1) entsteht.

11. Verfahren nach Anspruch 10, wobei die Temperatur des Montagehilfematerials bei dem Umspritzen der Montagehilfe (2) geringer ist als die Schmelztemperatur T_{MA} des Anschlussteilmaterials.

12. Verfahren nach einem der Ansprüche 10 oder 11, wobei die Montagehilfe (2) in radialer Richtung beim Abkühlen um 0,1 bis 20 % schrumpft.

13. Verfahren nach einem der Ansprüche 10 bis 12, wobei die Kapselung (3) wenigstens um das Heizmittel (8) herum gespritzt wird.

14. Verfahren nach einem der Ansprüche 11 bis 13, wobei das Anschlussteil (1) ein Spritzgussteil ist und die Montagehilfe (2) mittels Mehrkomponenten-Spritzgießen an dem Anschlussteil (1) angeordnet wird.

## Claims

1. A connector, in particular quick connector, for a fluid medium in a motor vehicle, in particular for a urea solution, the connector having a connection part (1), an assembly aid (2) and an encapsulation (3), the connection part (1) comprising two connection ends (4, 5), an inner duct (6) connecting the connection ends (4, 5) to each other in order to conduct the fluid medium, the connection part (1) having a central section (7) between the connection ends (4, 5), the assembly aid (2) being arranged on the outside of the connection part (1), at least in a portion of the central section (7), a heating means (8) running along the assembly aid (2), the encapsulation (3) covering at least some of the heating means (8), the assembly aid (2) being arranged on the connection part (1) by means of a force fit,
**characterised in that**
the assembly aid (2) is elastic in a rubber-like manner.

2. The connector according to Claim 1, wherein the assembly aid (2) is integrally bonded with the encapsulation (3), at least in a portion.

3. The connector according to either of Claims 1 or 2, wherein the assembly aid (2) comprises a thermoplastic elastomer.

4. The connector according to any one of Claims 1 to 3, wherein the encapsulation (3) consists of a thermoplastic elastomer.

5. The connector according to any one of Claims 1 to 4, wherein the connection part (1) consists of a thermoplastic material.

6. The connector according to any one of Claims 1 to 5, wherein the melting temperature T_{MM} of the assembly aid material is lower than the melting temperature T_{MA} of the connection part material.

7. The connector according to any one of Claims 1 to 6, wherein the assembly aid (2) on the connection part (1) is under tensile stress, preferably directed radially.

8. The connector according to any one of Claims 1 to 7, wherein the cross-section of an inner face of the assembly aid (2) which faces the connection part (1) is constant over at least one contiguous quarter of the axial length of the assembly aid (2).

9. The connector according to any one of Claims 1 to 8, wherein the assembly aid (2) has at least one raised portion (9) in longitudinal section, which raised portion (9) has two opposing flanks and is solid.

10. A method for producing a connector, in particular a connector according to any one of Claims 1 to 9, the connector comprising a connection part (1), an assembly aid (2) and an encapsulation (3), the connection part (1) having two connection ends (4, 5), an inner duct (6) connecting the connection ends (4, 5) to each other in order to conduct a fluid medium, the connection part (1) having a central section (7) between the connection ends (4, 5), the assembly aid (2) being arranged on the outside of the connection part (1), at least in a portion of the central section (7), a heating means (8) being arranged on the assembly aid (2), the encapsulation (3) covering at least some of the heating means (8),
**characterised in that**
the assembly aid (2) is elastic in a rubber-like manner and is injection-moulded over the connection part (1), wherein the assembly aid (2) is shrunk after the overmoulding so that a force fit is produced between the assembly aid (2) and the connection part (1).

11. The method according to Claim 10, wherein the temperature of the assembly aid material during overmoulding of the assembly aid (2) is lower than the melting temperature T_{MA} of the connection part material.

12. The method according to either of Claims 10 or 11, wherein the assembly aid (2) shrinks by 0.1 to 20% in the radial direction on cooling.

13. The method according to any one of Claims 10 to 12, wherein the encapsulation (3) is injection-moulded at least over the heating means (8).

14. The method according to any one of Claims 11 to 13, wherein the connection part (1) is an injection-moulded part and the assembly aid (2) is arranged on the connection part (1) by means of multi-component injection-moulding.

## Revendications

1. Raccord, notamment raccord rapide, pour un milieu fluide d'un véhicule automobile, notamment pour une solution d'urée, le raccord comportant une pièce de raccordement (1), une aide au montage (2) et un capsulage (3), la pièce de raccordement (1) comprenant deux extrémités de raccordement (4, 5), un conduit intérieur (6) reliant entre elles les extrémités de raccordement (4, 5) dans le but de faire passer le milieu fluide, la pièce raccordement (1) comportant une section centrale (7) entre les extrémités de raccordement (4, 5), l'aide de montage (2) étant disposée au moins dans une partie de zone de la section centrale (7) sur la face extérieure de la pièce de raccordement (1), un moyen de chauffage (8) étant guidé sur l'aide au montage (2), le capsulage (3) recouvrant au moins une partie du moyen de chauffage (8), l'aide de montage (2) étant disposée par adhérence de force sur la pièce de raccordement (1),
**caractérisé en ce que**
l'aide au montage (2) est constituée de façon élastique de type caoutchouc.

2. Raccord selon la revendication 1, l'aide au montage (2) étant au moins dans une zone partielle introduite par conformité de matière avec le capsulage (3).

3. Raccord selon l'une quelconque des revendications 1 ou 2, l'aide au montage (2) comprenant un élastomère thermoplastique.

4. Raccord selon l'une quelconque des revendications 1 à 3, le capsulage (3) étant composé d'un élastomère thermoplastique.

5. Raccord selon l'une quelconque des revendications 1 à 4, la pièce de raccordement (1) étant composée d'un matériau thermoplastique.

6. Raccord selon l'une quelconque des revendications 1 à 5, la température de fusion T_{MM} du matériau d'aide au montage étant inférieure à la température de fusion T_{MA} du matériau de la pièce de raccordement.

7. Raccord selon l'une quelconque des revendications 1 à 6, l'aide au montage (2) sur la pièce de raccordement (1), étant sous une contrainte de traction de préférence orientée radialement.

8. Raccord selon l'une quelconque des revendications 1 à 7, la section transversale d'une surface intérieure de l'aide au montage (2) tournée vers la pièce de raccordement (1) étant constante sur au moins un quart continu de la longueur axiale de l'aide au montage (2).

9. Raccord selon l'une quelconque des revendications 1 à 8, l'aide au montage (2) comportant dans la section longitudinale au moins une surélévation (9) avec deux flancs opposés, laquelle surélévation (9) étant constituée de façon massive.

10. Procédé pour la fabrication d'un raccord, notamment d'un raccord selon l'une quelconque des revendications 1 à 9, le raccord comprenant une pièce de raccordement (1), un montage (2) et un capsulage (3), la pièce de raccordement (1) comportant deux extrémités de raccordement (4, 5), un conduit intérieur (6) reliant entre elles les extrémités de raccordement (4, 5) dans le but de faire passer un milieu fluide, la pièce de raccordement (1) comportant une section centrale (7) entre les extrémités de raccordement (4, 5), l'aide au montage (2) étant disposée au moins dans une partie de zone de la section centrale (7) sur la face extérieure de la pièce de raccordement (1), un moyen de chauffage (8) étant disposé sur l'aide au montage (2), le capsulage (3) recouvrant au moins une partie du moyen de chauffage (8),
**caractérisé en ce que**
l'aide au montage (2) est constitué de façon élastique de type caoutchouc et est enrobée par injection autour de la pièce de raccordement (1), l'aide au montage (2) se rétractant après l'enrobage par injection de telle sorte qu'il se crée une adhérence par force entre l'aide au montage (2) et la pièce de raccordement (1).

11. Procédé selon la revendication 10, la température du matériau d'aide au montage étant inférieure lors de l'enrobage par injection de l'aide au montage (2) à la température de fusion T_{MA} du matériau de la pièce de raccordement.

12. Procédé selon l'une quelconque des revendications 10 ou 11, l'aide au montage (2) se rétractant d'environ 0,1% à 20% en direction radiale lors du refroidissement.

13. Procédé selon l'une quelconque des revendications 10 à 12, le capsulage (3) étant injecté au moins autour du moyen de chauffage (8).

14. Procédé selon l'une quelconque des revendications 11 à 13, la pièce de raccordement (1) étant une pièce moulée par injection et l'aide au montage (2) étant disposée sur la pièce de raccordement (1) au moyen d'un moulage par injection à plusieurs composants.
